# EUROPÄISCHE PATENTSCHRIFT

(11) **EP 4 406 808 B1**
(45) Veröffentlichungstag und Bekanntmachung des Hinweises auf die Patenterteilung: **04.02.2026**
(21) Anmeldenummer: 23214929.4
(22) Anmeldetag: 07.12.2023
(51) Int. Cl.: B61D 23/02

(54) **BODENWANNE FÜR ZUSTIEGSHILFEN**
FLOOR PAN FOR CLIMBING AIDS
PLANCHER POUR DES AIDES À LA MONTÉE

(30) Priorität: 30.01.2023 DE 202023100417 U
(43) Veröffentlichungstag der Anmeldung: 31.07.2024
(73) Patentinhaber: Bode - Die Tür GmbH, 34123 Kassel (DE)
(72) Erfinder: Theis, Christoph, 34537 Bad Wildungen (DE); Cimmino, Marco, 37139 Adelebsen (DE); Arend, Ulrich, 34576 Dickershausen (DE); Rasekhi Coochesfahani, Diako, 34128 Kassel (DE)
(74) Vertreter: Patentanwälte Bauer Vorberg Kayser

(56) Entgegenhaltungen:
- EP-B1- 1 535 592
- EP-B1- 1 916 156
- CN-A- 112 977 508
- KR-A- 20140 144 385

## Beschreibung

Die Erfindung betrifft eine Bodenwanne für eine Zustiegshilfe eines Fahrzeugs, insbesondere eines Schienenfahrzeugs, zur Verhinderung des Eindringens von Wasser von der Zustiegshilfe ins Fahrzeug.

Zustiegshilfen werden häufig in Fahrzeugen des öffentlichen Personen Nahverkehrs eingesetzt, wie zum Beispiel in Schienenfahrzeugen oder Bussen. Die Zustiegshilfen überbrücken dabei die Lücke zwischen Schienenfahrzeug und Bahnsteig oder bilden eine Auffahrrampe zum erleichterten Einstieg in das Fahrzeug. Die Zustiegshilfen weisen dazu eine in einem Rahmen ausfahrbar gelagerte Trittfläche auf. Diese Trittfläche wird meist seitlich aus dem Fahrzeug herausgefahren. Die Trittfläche ist während ihres Einsatzes Schmutz und Flüssigkeiten wie beispielsweise Regen ausgesetzt. Wird die nasse oder schmutzige Trittfläche wieder in das Fahrzeug eingefahren tropft das Wasser und der Schmutz in das Innere des Fahrzeugs.

Weitere Zustiegshilfen können dem Stand der Technik aus den Dokumenten EP 1 535 592 B1 und EP 1 916 156 B1 entnommen werden.

Um eine Verschmutzung oder eventuelle Beschädigung des Fahrzeugs durch eingetretenes Wasser zu vermeiden werden die Zustiegshilfen bislang manuell abgedichtet. Dies umfasst das Verschließen der Unterseite der Zustiegshilfe mit einer Bodenplatte und das Versigeln der Öffnungen im Rahmen der Zustiegshilfe. Dazu werden die Öffnungen mit Dichtmasse oder Kleber geschlossen. Anschließend wird die Zustiegshilfe einer Dichtigkeitsprüfung unterzogen und etwaige Undichtigkeiten noch einmal nachbearbeitet.

Diese Vorgehensweise ist umständlich und störanfällig, so dass es die Aufgabe der Erfindung ist eine verbesserte Abdichtung der Zustiegshilfe gegenüber dem Fahrzeug bereitzustellen.

Diese Aufgabe wird durch die Vorrichtungen und das Verfahren mit den Merkmalen der unabhängigen Patentansprüche gelöst. Weitere, besonders vorteilhafte Ausgestaltungen der Erfindung offenbaren die jeweiligen Unteransprüche.

Erfindungsgemäß ist eine Baugruppe umfassend eine Bodenwanne und eine Zustiegshilfe, wobei die Zustiegshilfe als Schiebetritt ausgeführt ist, bei dem eine Trittfläche in einem Rahmen ausfahrbar gelagert ist. Solche Zustiegshilfen werden häufig in Bussen oder Bahnen eingesetzt, so dass die Bodenwanne insbesondere für Zustiegshilfen in Schienenfahrzeugen einsetzbar ist. Die erfindungsgemäße Bodenwanne zeichnet sich durch eine Bodenplatte und wenigstens drei lotrecht zur Bodenplatte angeordnete und in einer U-Form miteinander verbundene Seitenwände aus, wobei die Bodenplatte und die Seitenwände flüssigkeitsundurchlässig miteinander verbunden sind, und die Bodenwanne dazu eingerichtet ist, die Zustiegshilfe zwischen zwei gegenüberliegenden Seitenwänden und oberhalb der Bodenplatte aufzunehmen.

Die Zustiegshilfe spannt, wenn die Trittfläche eingefahren ist, einen quaderförmigen Bauraum auf, der im Wesentlichen durch die Ausmaße des Rahmens bestimmt ist. Der Bauraum weist eine Oberseite, eine der Oberseite gegenüberliegende Unterseite, und vier die Oberseite mit der Unterseite verbindende Seitenwände auf. Die Trittfläche kann durch eine der Seitenwände hindurch ausgefahren werden. In der Regel ist der Abstand zwischen der Oberseite und der Unterseite sehr viel geringer als die Breite und die Länge der Oberseite bzw. der gleich großen Unterseite.

Die Bodenwanne umfasst eine Bodenplatte und drei Seitenwände, so dass die Bodenwanne eine nach oben offene und zu einer Seite offene Wanne bildet, während die Wanne nach unten hin und zu drei Seiten geschlossen ist. Zwei der Seitenwände sind gegenüberliegend angeordnet, während der dritten Seitenwand eine offene Seitenfläche gegenüber liegt. Die Seitenwände sind an den Kontaktstellen untereinander und an den Kontaktstellen zur Bodenplatte flüssigkeitsundurchlässig verbunden. Die Seitenwände bilden zusammen eine zu einer Seite offene Form wie beispielsweise eine U-Form aus. Dabei können alle Seitenwände bzw. die drei Schenkel der U-Form aus geraden Ebenen gebildet sein, oder es kann beispielsweise die Seitenwand, die die beiden gegenüberliegend angeordneten Seitenwände verbindet, gekrümmt sein.

Sofern die Bodenwanne aus mehreren Teilen zusammengesetzt wird, können die Kontaktstellen flüssigkeitsundurchlässig geschweißt, geklebt oder mit Dichtungsmittel versiegelt sein. Die Wanne kann aber auch in einem Tiefziehverfahren, oder einem Gießverfahren hergestellt sein. Denkbar ist auch ein kombinierter Kant- und Schweißprozess, bei dem die Seitenwände zusammenhängend mit der Bodenplatte aus einer Grundplatte ausgeschnitten und durch einen Kantprozess senkrecht zur Bodenblatte aufgestellt werden, wobei die Verbindungsstellen der Seitenwände untereinander dann durch einen Schweißprozess miteinander flüssigkeitsundurchlässig verbunden werden. Wichtig ist, dass die Bodenwanne für sich genommen auch ohne das Vorhandensein der Zustiegshilfe flüssigkeitsundurchlässig eingerichtet ist.

Die Zustiegshilfe ist im montierten Zustand auf der Bodenplatte und zwischen den zwei gegenüberliegenden Seitenwänden angeordnet. Die Bodenplatte schließt die Zustiegshilfe nach unten hin und zu drei Seiten flüssigkeitsundurchlässig ab. Eine Seite der Zustiegshilfe bleibt dabei offen, so dass eine Trittfläche der Zustiegshilfe an dieser Seite herausgefahren werden kann.

Die Bodenwanne ist dazu eingerichtet mit dem Fahrzeug verbunden zu werden. Dazu kann die Bodenwanne mit dem Fahrzeug verschraubt, verklebt oder verschweißt werden.

Ausgehend von der Bodenplatte in Richtung des Fahrzeugs und ausgehend von den Seitenwänden in Richtung des Fahrzeugs können keine Flüssigkeiten aus der Bodenwanne in das Fahrzeug gelangen. Dazu kann es von Vorteil sein, wenn die Bodenwanne zum Fahrzeug, insbesondere in den Randbereichen der Bodenwanne, mit Dichtungsmittel in das Fahrzeug einsetzt wird, beispielsweise mit einer Naht aus Dichtungsmittel, wie beispielsweise Silikon oder einem Konstruktionsklebstoff. Der Randbereich des Kontaktbereichs zwischen Bodenwanne und Fahrzeug kann auf diese Weise auch noch nach Montage der Bodenwanne abgedichtet werden.

Daher ist in einer Ausführungsform der Bodenwanne die Bodenwanne derart eingerichtet ist, dass Flüssigkeiten, die von der Zustiegshilfe aufgrund der Schwerkraft abtropfen, in der Bodenwanne aufgefangen werden. Die Trittfläche der Zustiegshilfe ist vor allem bei schlechtem Wetter Regen und Schmutz ausgesetzt, so dass durch die Trittfläche Flüssigkeiten und Schmutz in die Zustiegshilfe und damit auch in das Fahrzeug eingetragen werden. Diese Flüssigkeiten und dieser Schmutz kann von der Zustiegshilfe aufgrund der Schwerkraft nach unten abtropfen und sich auch in einem gewissen Maße seitlich durch die auftretenden Fliehkräfte während des Betriebs des Fahrzeugs verteilen. Damit die Flüssigkeit und der Schmutz sich nicht im Fahrzeug verteilen, wird die Flüssigkeit und der Schmutz in der Bodenwanne aufgefangen.

Insbesondere ist die Bodenwanne dazu eingerichtet, die von der Bodenwanne aufgefangenen Flüssigkeiten in eine äußere Umgebung des Fahrzeugs abzuleiten. Dazu kann die offene Seite der Bodenwanne fluchtend mit einer Außenhülle des Fahrzeugs angeordnet sein, und vorzugsweise in Richtung der offen Seite der Bodenwanne geneigt sein, so dass die Flüssigkeit aus der Bodenwanne heraus in eine Umgebung außerhalb der Außenhülle des Fahrzeugs ablaufen kann.

Es ist aber ebenfalls denkbar, dass die Bodenwanne eine Ableitung zum Ableiten von in der Bodenwanne aufgefangenen Flüssigkeiten umfasst. Eine solche Ableitung kann einen Schlauch oder eine Rohrführung umfassen, welche an der Bodenplatte angeschlossen ist. Die Ableitung kann in eine Umgebung außerhalb des Fahrzeugs bzw. außerhalb der Fahrzeughülle führen, so dass die Flüssigkeit nach dorthin ablaufen kann. Zur besseren Abführung der Flüssigkeit kann die Bodenplatte der Bodenwanne eine Art Trichter ausbilden, an dessen Ausguss die Ableitung angeschlossen ist.

In einer weiteren Ausgestaltung der Bodenwanne weist die Bodenwanne eine nach oben weisende Öffnung zur Aufnahme der Zustiegshilfe auf. Durch die Öffnung kann die Zustiegshilfe auch nach der Montage der Bodenwanne im Fahrzeug noch von oben in die Bodenwanne eingesetzt und montiert werden.

Es ist aber auch denkbar, dass die Zustiegshilfe bei der Montage in der Bodenwanne durch eine zur Seite weisende Öffnung der Bodenwanne in diese eingeschoben werden kann. Diese seitliche Öffnung kann dann später dazu dienen das Ein- und Ausfahren der Trittfläche der Zustiegshilfe zu ermöglichen.

In einer weiteren Ausgestaltung der Bodenwanne weist die Bodenwanne eine der Bodenplatte gegenüberliegend angeordnete Deckelplatte auf. Die Deckelplatte kann dabei mit dem Rahmen der Zustiegshilfe und/oder mit der Bodenwanne verbunden werden. Es kann von Vorteil sein, wenn die Deckelplatte flüssigkeitsundurchlässig mit den Seitenwänden der Bodenplatte verbunden ist. Auf diese Weise kann auch keine Flüssigkeit beispielsweise als Wasserdampf bzw. Kondenswasser die Bodenwanne nach oben in Richtung des Fahrzeugs verlassen. Die Bodenwanne bildet dann zusammen mit der Deckelplatte ein in fünf Richtungen abgeschlossenes quaderförmiges, insbesondere rechteckiges, Behältnis, wobei nur eine Seite des Quaders zum Ein- und Ausfahren der Trittfläche offen bleibt. Die Offene Seite kann fluchtend mit der Außenhülle des Fahrzeugs angeordnet sein, und flüssigkeitsundurchlässig mit dem Fahrzeug verbunden sein, so dass keinerlei Flüssigkeit aus der Bodenwanne in Richtung des Fahrzeugs entweichen kann.

Die Zustiegshilfe weist vorliegend einen Rahmen und eine an dem Rahmen ausfahrbar gelagerte Trittfläche auf, wobei die Zustiegshilfe an wenigstens vier Seiten durch die Bodenwanne flüssigkeitsundurchlässig abgeschlossen ist. Die Bodenwanne ist an dem Rahmen der Zustiegshilfe befestigt. Die Befestigung kann mittels Schraubverbindungen, und/oder Klebeverbindungen und/oder Schweißverbindungen erfolgen.

Erfindungsgemäß ist auch ein Schienenfahrzeug mit einer Baugruppe umfassend einen Schiebetritt und eine Bodenwanne, wobei die Bodenwanne den Schiebetritt derart von dem Fahrzeug trennt, dass Flüssigkeiten, die aufgrund der Schwerkraft von dem Schiebetritt abtropfen, in der Bodenwanne aufgefangen werden.

Insbesondere ist die Bodenwanne derart eingerichtet, dass von der Bodenwanne aufgefangene Flüssigkeiten in eine äußere Umgebung des Fahrzeugs abgeleitet werden.

Erfindungsgemäß ist auch ein Verfahren zur flüssigkeitsdichten Montage eines Schiebetritts in einem Fahrzeug, wobei das Verfahren die folgenden Verfahrensschritte umfasst:
a) Bereitstellen einer zu wenigstens vier Seiten flüssigkeitsdichten Bodenwanne gemäß einer erfindungsgemäßen Baugruppe,
b) Montage des Schiebetritts in der Bodenwanne und Montage der Baugruppe aus Bodenwanne und Schiebetritt in dem Fahrzeug.

Da die herkömmliche Abdichtung einer Zustiegshilfe wie eingangs beschrieben sehr zeitaufwändig und fehleranfällig ist, bietet sich der Einsatz einer Bodenwanne an. Da die Bodenwanne für sich genommen bereits flüssigkeitsundurchlässig ist, können keine Undichtigkeiten durch eine fehlerhafte Montage des Schiebetritts auftreten.

Es ist vorgesehen, dass der Schiebetritt zunächst mit der Bodenwanne zu einer Baugruppe montiert wird und in einem darauffolgenden Schritt die Baugruppe in dem Fahrzeug montiert wird. Da auch hier die Bodenwanne bereits für sich genommen flüssigkeitsundurchlässig ausgestaltet ist, können bei der Montage des Schiebetritts die fehleranfälligen Abdichtungsschritte entfallen.

Die vorliegende Erfindung wird nachfolgend anhand von Ausführungsbeispielen unter Bezugnahme auf die beigefügten Figuren eingehend erläutert. Es zeigen:
- Figur 1: eine Bodenwanne montiert in einem Fahrzeug,
- Figur 2: die Bodenwanne aus Fig. 1 mit einer darin montierten Zustiegshilfe,
- Figur 3: die Bodenwanne und die Zustiegshilfe aus Fig. 1 in einer Einzeldarstellung,
- Figur 4: eine Baugruppe aus einer Bodenwanne und einer Zustiegshilfe vorbereitet für die Montage in einem Fahrzeug.

In den Figuren bezeichnen - soweit nicht anders angegeben - gleiche Bezugszeichen gleiche oder einander entsprechende Komponenten mit gleicher Funktion.

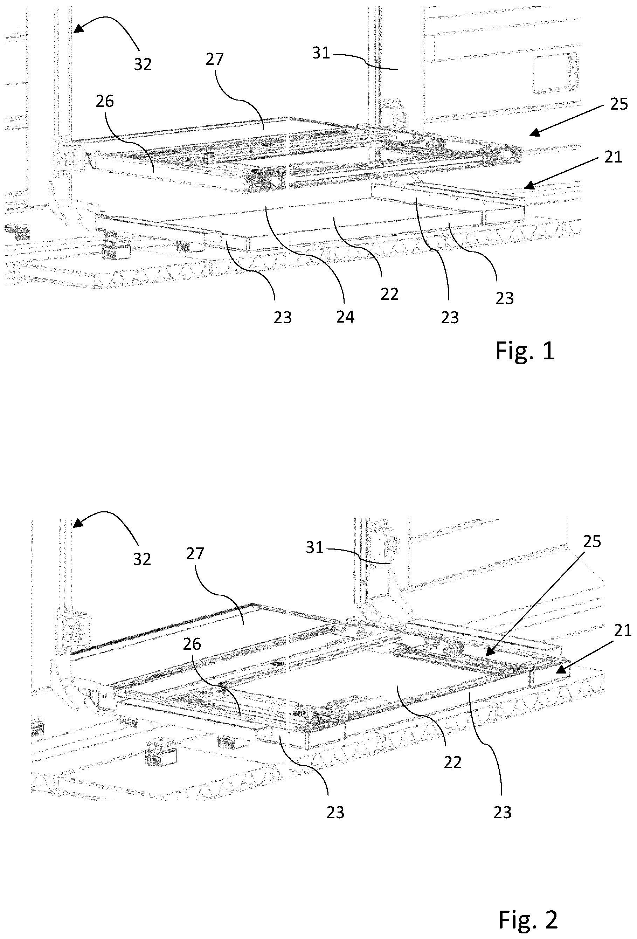

Fig. 1 zeigt eine Bodenwanne 21 montiert in einem Fahrzeug 31. Über der Bodenwanne 21 ist eine Zustiegshilfe 25 dargestellt, die in einem nächsten Montageschritt in der Bodenwanne 21 angeordnet wird.

Das Fahrzeug 31 ist ein Schienenfahrzeug, wobei sich das Fahrzeug 31 in einem teilweise zusammengesetzten Stadium während der Montage befindet. Beispielsweise fehlt in diesem Stadium der Fußboden des Fahrzeugs 31 unter dem die Bodenwanne zusammen mit der Zustiegshilfe 25 im normalen Betrieb verschwindet.

Die Zustiegshilfe 25 ist ein Schiebetritt mit einem Rahmen 26 der als Träger für eine Trittfläche 27 dient. Die Trittfläche 27 ist ausfahrbar an dem Rahmen 26 gelagert und kann zu einer Seite ein- und ausfahren. In den Figuren ist die Trittfläche 27 in einem ausgefahrenen Zustand dargestellt.

Die Bodenwanne 21 umfasst eine Bodenplatte 22 und drei Seitenwände 23, wobei zwei der Seitenwände 23 gegenüberliegend angeordnet sind und durch die dritte Seitenwand 23 miteinander verbunden sind. Die Seitenwände 23 sind senkrecht auf der Bodenplatte 22 angeordnet und mit dieser fest und flüssigkeitsundurchlässig verbunden. Dies gilt auch für die Kontaktstellen der Seitenwände 23 untereinander. Eine Seite der Bodenwanne 21 ist offen ausgeführt. Durch diese offene Seite 24 kann die Trittfläche 27 der Zustiegshilfe 25 ein- und ausgefahren werden.

Die Bodenwanne 21 kann Flüssigkeiten, die von der Trittfläche 27 oder der Zustiegshilfe 25 abtropfen auffangen, so dass die Flüssigkeit nicht in unter der Bodenwanne 21 gelegene Bereiche des Fahrzeugs gelangen kann. Die Seitenwände 23 hindern zudem die Flüssigkeit daran durch während des Betriebs des Fahrzeugs 31 auftretende Querbeschleunigungen seitlich über die Bodenplatte 22 hinaus in das Fahrzeug 31 zu gelangen.

Die offene Seite 24 ist fluchtend mit einer Außenhülle 32 des Fahrzeugs 31 angeordnet, so dass die von der Bodenwanne 21 aufgefangene Flüssigkeit über die offene Seite 24 der Bodenwanne 21 in eine äußere Umgebung der Außenhülle 32 des Fahrzeugs 31 abgeführt werden kann.

In Fig. 2 ist die Zustiegshilfe 25 in der Bodenwanne 21 montiert. Die Trittfläche 27 ist durch die offene Seite 24 der Bodenwanne 21 und über die Außenhülle 32 hinaus ausgefahren.

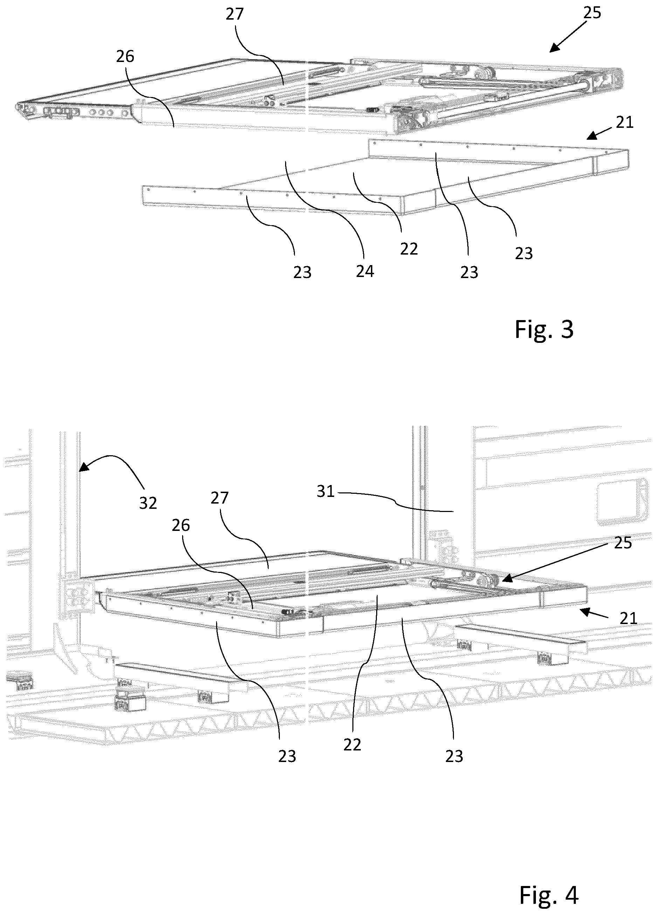

Fig. 3 zeigt noch einmal die Bodenwanne 21 und die Zustiegshilfe 25 in einer Einzeldarstellung. Gut zu erkennen ist die ausgefahrene Trittfläche 27 der Zustiegshilfe 25. Eine der Seitenwände 23 ist dem Rahmen 26 der Zustiegshilfe 25 angepasst und weist daher an beiden Enden Ausformungen auf, die der Kontur des Rahmens 26 der Zustiegshilfe 25 folgen.

Fig. 4 zeigt eine Baugruppe aus einer Bodenwanne 21 und einer Zustiegshilfe 25, welche für den Einbau im Fahrzeug 31 vormontiert ist. Die Bodenwanne 21 ist mit dem Rahmen 26 der Zustiegshilfe 25 fest verbunden und schließt die Zustiegshilfe 25 an vier Seiten (Unterseite und drei senkrechte Seiten) flüssigkeitsundurchlässig ab. Die offene Seite 24 weist ist Richtung Außenhülle 32 bzw. Türöffnung und wird in einem nachfolgenden Schritt mit der Außenhülle 32 fluchtend angeordnet.

### Bezugszeichenliste

- 21: Bodenwanne
- 22: Bodenplatte
- 23: Seitenwände
- 24: offene Seite

- 25: Zustiegshilfe
- 26: Rahmen
- 27: Trittfläche

- 31: Fahrzeug
- 32: Außenhülle

## Patentansprüche

1. Baugruppe umfassend eine Bodenwanne (21) und einen Schiebetritt für ein Fahrzeug (31), wobei der Schiebetritt einen Rahmen (26) und eine an dem Rahmen (26) ausfahrbar gelagerte Trittfläche (27) aufweist,
**dadurch gekennzeichnet, dass**
der Schiebetritt an wenigstens vier Seiten durch die Bodenwanne (21) flüssigkeitsundurchlässig abgeschlossen ist, wobei die Bodenwanne (21) eine Bodenplatte (22) und wenigstens drei lotrecht zur Bodenplatte (22) angeordnete und in einer U-Form miteinander verbundene Seitenwände (23) aufweist, wobei die Bodenplatte (22) und die Seitenwände (23) flüssigkeitsundurchlässig miteinander verbunden sind, und die Bodenwanne (21) dazu eingerichtet ist, den Schiebetritt zwischen zwei gegenüberliegenden Seitenwänden (23) und auf der Bodenplatte (22) aufzunehmen, wobei die Bodenwanne (21) an dem Rahmen (26) befestigt ist.

2. Baugruppe nach dem vorhergehenden Anspruch,
**dadurch gekennzeichnet, dass**
die Bodenwanne (21) derart eingerichtet ist, dass Flüssigkeiten, die von dem Schiebetritt aufgrund der Schwerkraft abtropfen, in der Bodenwanne (21) aufgefangen werden.

3. Baugruppe nach dem vorhergehenden Anspruch,
**dadurch gekennzeichnet, dass**
die Bodenwanne (21) dazu eingerichtet ist, die von der Bodenwanne (21) aufgefangenen Flüssigkeiten in eine äußere Umgebung des Fahrzeugs (31) abzuleiten.

4. Baugruppe nach einem der beiden vorhergehenden Ansprüche,
**dadurch gekennzeichnet, dass**
die Bodenwanne (21) eine Ableitung zum Ableiten von in der Bodenwanne (21) aufgefangenen Flüssigkeiten umfasst.

5. Baugruppe nach einem der vorhergehenden Ansprüche,
**dadurch gekennzeichnet, dass**
die Bodenwanne (21) eine nach oben weisende Öffnung zur Aufnahme des Schiebetritts aufweist.

6. Baugruppe nach einem der vorhergehenden Ansprüche,
**dadurch gekennzeichnet, dass**
die Bodenwanne (21) eine zur Seite weisende Öffnung zur Aufnahme des Schiebetritts aufweist.

7. Baugruppe nach einem der vorhergehenden Ansprüche,
**dadurch gekennzeichnet, dass**
die Bodenwanne (21) eine Öffnung aufweist, die ein Ein- und Ausfahren der Trittfläche (27) des Schiebetritts ermöglicht.

8. Baugruppe nach einem der vorhergehenden Ansprüche,
**dadurch gekennzeichnet, dass**
die Bodenwanne (21) eine der Bodenplatte (22) gegenüberliegend angeordnete Deckelplatte aufweist.

9. Schienenfahrzeug mit einer Baugruppe gemäß einem der Ansprüche 1 bis 8,
**dadurch gekennzeichnet, dass**
die Bodenwanne (21) den Schiebetritt derart von dem Fahrzeug (31) trennt, dass Flüssigkeiten, die aufgrund der Schwerkraft von dem Schiebetritt abtropfen, in der Bodenwanne (21) aufgefangen werden.

10. Schienenfahrzeug nach dem vorhergehenden Anspruch,
**dadurch gekennzeichnet, dass**
die Bodenwanne (21) derart eingerichtet ist, dass von der Bodenwanne (21) aufgefangene Flüssigkeiten in eine äußere Umgebung des Schienenfahrzeugs abgeleitet werden.

11. Verfahren zur flüssigkeitsdichten Montage eines Schiebetritts in einem Fahrzeug (31), umfassend die folgenden Verfahrensschritte:
a) Bereitstellen einer zu wenigstens vier Seiten flüssigkeitsdichten Bodenwanne (21) gemäß einer Baugruppe nach einem der Ansprüche 1 bis 8,
b) Montage des Schiebetritts in der Bodenwanne (21) und Montage der Baugruppe aus Bodenwanne (21) und Schiebetritt in dem Fahrzeug (31).

## Claims

1. An assembly comprising a base tray (21) and a sliding step for a vehicle (31), wherein the sliding step has a frame (26) and a step (27) mounted on the frame (26) so that it can be extended, **characterised in that** the sliding step is sealed by the base tray (21) on at least four sides so that it is impermeable to liquids, wherein the base tray (21) has a baseplate (22) and at least three side walls (23) arranged perpendicular to the baseplate (22) and connected to one another in a U-shape, wherein the baseplate (22) and the side walls (23) are connected to one another so as to be impermeable to liquids, and the base tray (21) is designed to receive the sliding step between two opposite side walls (23) and on the baseplate (22), wherein the base tray (21) is attached to the frame (26).

2. The assembly according to the preceding claim, **characterised in that** the base tray (21) is designed in such a way that liquids that drip off the sliding step due to gravity are caught in the base tray (21).

3. The assembly according to the preceding claim, **characterised in that** the base tray (21) is designed to drain the liquids caught by the base tray (21) into an exterior environment of the vehicle (31).

4. The assembly according to one of the two preceding claims, **characterised in that** the base tray (21) comprises a drain for draining liquids collected in the base tray (21).

5. The assembly according to one of the preceding claims, **characterised in that** the base tray (21) has an upwardly pointing opening for receiving the sliding step.

6. The assembly according to one of the preceding claims, **characterised in that** the base tray (21) has a sideways pointing opening for receiving the sliding step.

7. The assembly according to one of the preceding claims, **characterised in that** the base tray (21) has an opening, which enables the step (27) of the step to be retracted and extended.

8. The assembly according to one of the preceding claims, **characterised in that** the base tray (21) has a cover plate arranged opposite the baseplate (22).

9. A rail vehicle having an assembly according to one of Claims 1 to 8, **characterised in that** the base tray (21) separates the sliding step from the vehicle (31) in such a way that liquids that drip off the sliding step due to gravity are caught in the base tray (21).

10. The rail vehicle according to the preceding claim, **characterised in that** the base tray (21) is designed in such a way that liquids caught by the base tray (21) are drained into an exterior environment of the rail vehicle.

11. A method for the liquid-tight installation of a sliding step in a vehicle (31), comprising the following method steps:
a) providing a base tray (21), which is liquid-tight on at least four sides, in accordance with an assembly according to one of Claims 1 to 8,
b) installing the sliding step in the base tray (21) and installing the assembly made up of the base tray (21) and sliding step in the vehicle (31).

## Revendications

1. Ensemble comprenant un plateau de plancher (21) et une marche coulissante pour véhicule (31), dans lequel la marche coulissante présente un châssis (26) et une surface de marche (27) montée de manière extensible sur le châssis (26),
**caractérisé en ce que**
la marche coulissante fermée par une étanchéité assurée sur au moins quatre côtés par le plateau de plancher (21), dans lequel la plateau de plancher (21) présente une plaque de base (22) et au moins trois parois latérales (23) disposées perpendiculairement à la plaque de base (22) et reliées les unes aux autres en forme de U, dans lequel la plaque de base (22) et les parois latérales (23) sont assemblées de manière étanche et le plateau de plancher (21) est conçu pour recevoir la marche coulissante entre deux parois latérales opposées (23) et sur la plaque de base (22), dans lequel le plateau de plancher (21) est fixé au châssis (26).

2. Ensemble selon la revendication précédente, **caractérisé en ce que** le plateau de plancher (21) est configuré de manière à recueillir dans le plateau de plancher (21) les liquides s'écoulant de la marche coulissante sous l'effet de la gravité.

3. Ensemble selon la revendication précédente, **caractérisé en ce que** le plateau de plancher (21) est configuré pour évacuer les liquides qui sont recueillis par le plateau de plancher (21) vers l'extérieur du véhicule (31).

4. Ensemble selon une des deux revendications précédentes, **caractérisé en ce que** le plateau de plancher (21) comprend un orifice d'évacuation des liquides qui sont recueillis dans le plateau de plancher (21).

5. Ensemble selon une des revendications précédentes, **caractérisé en ce que** le plateau de plancher (21) présente une ouverture orientée vers le haut pour recevoir la marche coulissante.

6. Ensemble selon une des revendications précédentes, **caractérisé en ce que** le plateau de plancher (21) présente une ouverture orientée latéralement pour recevoir la marche coulissante.

7. Ensemble selon une des revendications précédentes, **caractérisé en ce que** le plateau de plancher (21) présente une ouverture permettant le déploiement et le repliement de la surface de marche (27) de la marche coulissante.

8. Ensemble selon une des revendications précédentes, **caractérisé en ce que** le plateau de plancher (21) présente une plaque de recouvrement disposée en face de la plaque de base (22).

9. Véhicule ferroviaire comportant un ensemble selon une des revendications 1 à 8, **caractérisé en ce que** le plateau de plancher (21) sépare la marche coulissante du véhicule (31) de manière à recueillir dans le plateau de plancher (21) les liquides gouttant de la marche coulissante par gravité.

10. Véhicule ferroviaire selon la revendication précédente, **caractérisé en ce que** le plateau de plancher (21) est configuré de manière à ce que les liquides recueillis dans le plateau de plancher (21) soient évacués vers un environnement extérieur du véhicule ferroviaire.

11. Procédé de montage étanche d'une marche coulissante dans un véhicule (31), comprenant les étapes de procédé suivantes :
a) fourniture d'un plateau de plancher (21) étanche sur au moins quatre côtés, conformément à un quelconque des ensembles décrits dans une des revendications 1 à 8,
b) montage de la marche coulissante dans le plateau de plancher (21) et montage de l'ensemble constitué du plateau de plancher (21) et de la marche coulissante dans le véhicule (31).
